# EUROPÄISCHE PATENTSCHRIFT

(11) **EP 2 558 617 B1**
(45) Veröffentlichungstag und Bekanntmachung des Hinweises auf die Patenterteilung: **18.10.2017**
(21) Anmeldenummer: 11725605.7
(22) Anmeldetag: 14.04.2011
(51) Int. Cl.: C23C 28/02, C23C 30/00, C22C 9/00, C25D 7/10, F16C 33/06

(54) **MEHRSCHICHTGLEITLAGER MIT EINER ANTIFRETTINGSCHICHT**
BEARING HAVING A MULTILAYER WEAR RESISTANT COATING
PALIER LISSE MULTICOUCHE COMPORTANT UNE COUCHE ANTI-USURE DE CONTACT

(30) Priorität: 15.04.2010 AT 6022010
(43) Veröffentlichungstag der Anmeldung: 20.02.2013
(73) Patentinhaber: Miba Gleitlager Austria GmbH, 4663 Laakirchen (AT)
(72) Erfinder: ZIDAR, Jakob, 4813 Altmünster (AT)
(74) Vertreter: Burger, Hannes
(86) Internationale Anmeldenummer: PCT/AT2011/000185
(87) Internationale Veröffentlichungsnummer: WO 2011/127513

(56) Entgegenhaltungen:
- WO-A1-02/48563
- DE-A1-102004 038 191
- DE-A1-102005 015 467
- DE-A1-102006 060 021
- DE-A1-102007 013 707
- DE-B3-102006 019 826
- JP-A- 2006 153 193
- US-A- 5 312 696

## Beschreibung

Die Erfindung betrifft ein Mehrschichtgleitlager mit einer, einem zum lagernden Element zuwendbaren Vorderseite und einer dieser gegenüberliegenden Rückseite, umfassend eine Stützschicht, eine auf der Vorderseite angeordnete Gleitschicht sowie eine auf der Rückseite angeordnete Antifrettingschicht, wobei die Antifrettingschicht aus einer Kupferbasislegierung mit Kupfer-Mischkristall-Körnern besteht.

Die Rückenbeschichtung eines Gleitlagers mit einer Antifrettingschicht ist bereits aus dem Stand der Technik bekannt. Durch diese Beschichtung soll die Reibverschweißung bzw. Reibkorrosion und damit das "Festfressen" des Gleitlagers im Lagergehäuse aufgrund ungewollter Relativbewegungen der Bauteile zueinander vermieden werden. Als Folge der Reibkorrosion entstehen häufig auch Reibdauerbrüche. Die Reibkorrosion wird wesentlich auch bestimmt durch die Werkstoffpaarung. Harte Werkstoffe bzw. Bauelemente mit harten Oberflächenschichten neigen eher zu einem Abtrag durch Reibkorrosion als weiche Werkstoffe, die mehr zum Festfressen tendieren. Im letzteren Fall ist dann zwar die Relativbewegung unterbunden, allerdings liegt auch dann ein Schaden vor.

Um diesem Problem zu begegnen wurden im Stand der Technik bereits unterschiedlichste Werkstoffe zur Herstellung einer Antifrettingschicht beschrieben. So beschreibt z.B. die von der Anmelderin stammende AT 506 641 A1 eine Silberlegierung für diese Verwendung. Aus der ebenfalls von der Anmelderin stammenden AT 399 544 B ist eine Korrosionsschutzschicht aus einer Sn-Legierung bekannt. Ni-, Cr- bzw. Co-Legierungen für Antifrettingschichten sind aus der GB 2315301 A1 bekannt. Gemäß der WO 02/48563 A1 wird eine Zinnbronze als Antifrettingschicht eingesetzt. Eine als Antifrettingschicht galvanisch auf Stahl abgeschiedene Cu-Sn-Legierung mit einem Zinnanteil zwischen 10 % und 15 % ist aus der GB 556,248 A bzw. der GB 554,355 A bekannt. Aus der US 5,312,696 A sind Antifrettingschichten aus Cu-Ni-, Cu-Al- oder Cu-Al-Si-Legierungen bekannt.

Es ist die Aufgabe der Erfindung ein verbessertes Mehrschichtgleitlager, insbesondere eine verbesserte Antifrettingschicht auf Kupferbasis, anzugeben.

Diese Aufgabe wird durch das eingangs genannte Mehrschichtgleitlager gelöst, bei dem die Kupferbasislegierung der Antifrettingschicht durch eine binäre Legierung mit einem Legierungselement aus der Gruppe Zink, Indium, Silizium, Germanium, Antimon oder durch eine zumindest ternäre Legierung mit einem Legierungselement aus der Gruppe Zink, Indium, Germanium, Zinn, Antimon sowie zumindest einem weiteren Element aus dieser Gruppe und/oder der weiteren Gruppe Nickel, Kobalt, Eisen, Mangan, Bismut, Blei, Silber, Phosphor sowie aus der Herstellung stammende unvermeidbare Verunreinigungen enthält, wobei der Summenanteil dieser Legierungselemente mindestens 1 Gew.-% und maximal 30 Gew.-% beträgt, mit der Maßgabe folgender Mengenanteile für die Legierungselemente, falls das jeweilige Element in der Kupferbasislegierung vorhanden ist:
- dass der Anteil an Zink in der Kupferbasislegierung zwischen 0,5 Gew.-% und 25 Gew.-% beträgt,
- dass der Anteil an Indium in der Kupferbasislegierung zwischen 0,2 Gew.-% und 20 Gew.-% beträgt,
- dass der Anteil an Silizium in der Kupferbasislegierung zwischen 2 Gew.-% und 10 Gew.-% beträgt,
- dass der Anteil an Germanium in der Kupferbasislegierung zwischen 3 Gew.-% und 15 Gew.-% beträgt,
- dass der Anteil an Antimon in der Kupferbasislegierung zwischen 0,2 Gew.-% und 15 Gew.-% beträgt,
- dass der Anteil an Zinn in der Kupferbasislegierung zwischen 5 Gew.-% und 25 Gew.-% beträgt,
- der Anteil an Nickel in der Kupferbasislegierung zwischen 0,5 Gew.-% und 5 Gew.-% beträgt,
- dass der Anteil an Kobalt in der Kupferbasislegierung zwischen 0,2 Gew.-% und 8 Gew.-% beträgt,
- dass der Anteil an Eisen in der Kupferbasislegierung zwischen 0,2 Gew.-% und 5 Gew.-% beträgt,
- dass der Anteil an Mangan in der Kupferbasislegierung zwischen 0,2 Gew.-% und 5 Gew.-% beträgt,
- dass der Anteil an Bismut in der Kupferbasislegierung zwischen 1 Gew.-% und 25 Gew.-% beträgt,
- der Anteil an Blei in der Kupferbasislegierung zwischen 1 Gew.-% und 25 Gew.-% beträgt,
- dass der Anteil an Silber in der Kupferbasislegierung zwischen 1 Gew.-% und 20 Gew.-% beträgt,
- dass der Anteil an Phosphor zwischen 0,01 Gew.-% und 3 Gew.-% beträgt.

Auf der Suche nach einer Antifrettingschicht mit verbesserten Eigenschaften hat die Anmelderin neben den bereits voranstehend erwähnten Silberlegierungsschichten unter anderem auch Kupferbasislegierungen untersucht und überraschend festgestellt, dass voranstehend genannte Kupferbasislegierungen deutlich bessere Verschleißeigenschaften und/oder eine deutlich höhere Dauerfestigkeit, jedenfalls aber einen verbesserten Schutz vor Schäden durch Fretting aufwiesen als andere, wodurch die damit ausgestatteten Lager insbesondere für hoch beanspruchte Lager einsetzbar sind. Zurückgeführt wird dies auf den Zusatz von einem Legierungselement aus der Gruppe umfassend oder bestehend aus Zink, Indium, Silizium, Germanium, Antimon zur Ausbildung einer binären Legierung oder einem Legierungselement aus der Gruppe umfassend oder bestehend aus Zink, Indium, Silizium, Germanium, Zinn, Antimon sowie zumindest einem weiteren Element aus dieser Gruppe und/oder einer zweiten Gruppe umfassend oder bestehend aus Nickel, Kobalt, Eisen, Mangan, Bismut, Blei, Silber, Phosphor zur Ausbildung eines zumindest ternären Legierungssystems.

Insbesondere wird durch Silizium die Festigkeit der Antifrettingschicht verbessert.

Durch Zink, Nickel und Kobalt wird die Korrosionsbeständigkeit der Antifrettingschicht verbessert. Durch Zink wird zudem die Kaltumformbarkeit der Antifrettingschicht verbessert.

Zur Verbesserung der Gleitfähigkeit der Antifrettingschicht kann neben der Kupfer-Mischkristallphase eine gleitfähige Weichphase in der Matrix vorliegen, die insbesondere durch Blei, Bismut oder zumindest einen Festschmierstoff wie MoS₂, Graphit, WS₂ etc gebildet wird.

Germanium, Indium, Zinn, Bismut, Blei und Antimon verbessern die Anpassungsfähigkeit und/oder die Korrosionsfestigkeit der Antifrettingschicht an das das Gleitlager aufnehmende Gehäuse.

Durch Zink, Indium, Silizium, Germanium und Antimon wird weiters die Neigung des Kupferwerkstoffes mit dem Stahl zu verschweißen vermindert. Die Anmelderin vermutet, dass einerseits die gegenseitige Löslichkeit, also des Gehäusewerkstoffes in dem Beschichtungsmaterial und umgekehrt, und damit ein Materialübertrag reduziert, die Korrosionsfestigkeit und mechanische Widerstandsfähigkeit gegen Verschleiß und Ermüdung durch Bildung eines Substitutionsmischkristalls verbessert und dass durch die Legierungspartner die Bildung von dünnen fest haftenden, die Oberflächen von einander trennenden, Oxidschichten und/oder Reaktionsschichten mit Öladditiven erleichtert wird.

Durch Kombinationen dieser Elemente können die Eigenschaften der Beschichtung gezielt eingestellt werden bzw. auf den jeweiligen Anwendungsfall maßgeschneidert werden.

Es wurde dabei beobachtet, dass unter einem gewissen Gehalt der Effekt zu gering ist, über einem gewissen Wert und insbesondere über dem Summenwert von 30 Gew.-% sich große Mengen harter, spröder intermetallischer Phasen bilden, die sich negativ auf die Antifrettingschicht auswirken.

So wird beispielsweise eine Cu-Sn oder Cu-Ge Legierung durch Zusatz von 1 Gew.-% bis 25 Gew.-% Zn oder 1 Gew.-% bis 20 Gew.-% Indium deutlich unempfindlicher gegen den korrosiven Angriff, insbesondere schwefelhaltiger, Öladditive.

Eine Cu-Al Legierung wird durch Zusatz von 0,2 Gew.-% bis 15 Gew.-% Antimon deutlich verschleißfester, da ein Teil der Legierungselemente als feindisperse AlSb-Hartphase ausgeschieden wird.

Durch Zulegieren eines oder mehrerer Elemente aus der Gruppe Mangan, Eisen, Nickel, Cobalt kann die mechanische Festigkeit der Beschichtung und deren Korrosionsbeständigkeit stark erhöht werden. Insbesondere durch Nickel wird auch die Verformbarkeit verbessert. Leider wird durch diese Elemente die Verschweißneigung mit dem Gehäusematerial erhöht. Dieser Effekt wurde besonders bei Gehalten über 5 Gew.-%, insbesondere über 10 Gew.-%, beobachtet.

In Kombination mit Phosphor kommt es zur Bildung von Me3P und Me2P Phasen, wobei Me für ein Metall aus der oben genannten Gruppe Mangan, Eisen, Nickel, Cobalt steht. Diese in der Matrix feinverteilten Hartphasen verbessern die Antifretting-Eigenschaften deutlich. Da in diesen Phasen die jeweiligen Metalle gebunden sind, wird ihr negativer Einfluss auf die Verschweißneigung mit dem Gehäusematerial vermindert und meist vom positiven Einfluss der Hartphasen überwogen, wobei die Festigkeit durch die feindispersen Ausscheidungen meist erhalten bleibt.

Durch Zulegieren eines oder mehrerer Elemente aus der Gruppe Blei, Bismut und Silber oder durch Zusatz von Festschmierstoffen wie Graphit, MoS₂, WS₂ wird eine weitere Phase in das Gefüge eingebracht, die besonders gute Gleiteigenschaften aufweist. Dadurch kann eine Schädigung durch Fretting weiter vermindert werden oder eine Schädigung unter extremen Betriebszuständen (vergleichbar mit den Notlaufeigenschaften eines Lagermetalls) reduziert werden.

Blei, Bismut und Festschmierstoffe sind besonders weiche Materialien, die potenziell die Belastbarkeit der Beschichtung schwächen könnten, daher ist ihr Gehalt nach oben zu begrenzen.

Silber wird von vielen, insbesondere schwefelhaltigen Öladditiven, stark angegriffen. Dieser unerwünschte Effekt tritt besonders ausgeprägt bei Gehalten über 20 Gew.-% auf.

Die Angaben der bevorzugten Bereiche in den folgenden Ausführungsvarianten sind unter diesen, voranstehend angeführten Gesichtspunkten zu betrachten.

Nach einer Ausführungsvariante ist vorgesehen, dass der Zinngehalt zwischen 8 Gew.-% und 19 Gew.-%, insbesondere zwischen 10 Gew.-% und 16 Gew.-%, beträgt. Es wird damit die Härte der Antifrettingschicht erhöht, wodurch einerseits die Neigung zum "Festfressen" verringert wird und andererseits damit auch die Verschleißbeständigkeit weiter erhöht wird. Oberhalb von 25 Gew.-% bilden sich überwiegend intermetallische Phasen, die sehr spröde sind, wodurch die Verschleißbeständigkeit wieder sinkt. Unterhalb von 5 Gew.-% sind hingegen geringfügige Verbesserungen zu beobachten, die für sich allein allerdings nicht die gewünschten Verbesserungen erbrachten.

Insbesondere traten die voranstehend genannten Effekte betreffend die besseren Verschleißeigenschaften, die höhere Dauerfestigkeit und/oder der verbesserte Schutz vor Schäden durch Fretting auf, wenn zumindest eine der folgenden Bedingungen erfüllt ist:
- Der Anteil an Aluminium in der Kupferbasislegierung beträgt zwischen 2 Gew.-% und 12 Gew.-%, bevorzugt zwischen 4 Gew.-% und 8 Gew.-%.
- Der Anteil an Silizium in der Kupferbasislegierung beträgt bevorzugt zwischen 3 Gew.-% und 5 Gew.-%.
- Der Anteil an Germanium in der Kupferbasislegierung beträgt bevorzugt zwischen 4 Gew.-% und 10 Gew.-%.
- Der Anteil an Indium in der Kupferbasislegierung beträgt bevorzugt zwischen 1 Gew.-% und 5 Gew.-%, insbesondere zwischen 2 Gew.-% und 4 Gew.-%.
- Der Anteil an Zink in der Kupferbasislegierung beträgt bevorzugt zwischen 1 Gew.-% und 5 Gew.-%. Oberhalb von 15 Gew.-% wird die Antifrettingschicht zu "spröde". Unterhalb von 0,5 Gew.-% konnte keine wesentliche Verbesserung der Eigenschaften der Kupferlegierung beobachtet werden.
- Der Anteil an Mangan in der Kupferbasislegierung beträgt bevorzugt zwischen 0,2 Gew.-% und 2 Gew.-%, insbesondere zwischen 0,3 Gew.-% und 1 Gew.-%.
- Der Anteil an Eisen in der Kupferbasislegierung beträgt bevorzugt zwischen 0,2 Gew.-% und 2 Gew.-%, insbesondere zwischen 0,3 Gew.-% und 1 Gew.-%.
- Der Anteil an Nickel in der Kupferbasislegierung beträgt insbesondere zwischen 1 Gew.-% und 3 Gew.-%.
- Der Anteil an Kobalt in der Kupferbasislegierung beträgt bevorzugt zwischen 0,5 Gew.-% und 5 Gew.-%, insbesondere zwischen 1 Gew.-% und 3 Gew.-%.
- Der Summenanteil an Mangan, Eisen, Nickel und Cobalt beträgt maximal 10 Gew.-%, vorzugsweise maximal 6 Gew.-%.
- Der Anteil an Bismut in der Kupferbasislegierung beträgt bevorzugt zwischen 2 Gew.-% und 15 Gew.-%, insbesondere zwischen 5 Gew.-% und 10 Gew.-%.
- Der Anteil an Blei in der Kupferbasislegierung beträgt bevorzugt zwischen 2 Gew.-% und 15 Gew.-%, insbesondere zwischen 5 Gew.-% und 10 Gew.-%.
- Der Anteil an Silber in der Kupferbasislegierung beträgt bevorzugt zwischen 2 Gew.-% und 10 Gew.-%.
- Der Anteil an Antimon in der Kupferbasislegierung beträgt bevorzugt zwischen 0,2 Gew.-% und 10 Gew.-%, insbesondere zwischen 1 Gew.-% und 5 Gew.-%.
- Der Anteil an Phosphor beträgt bevorzugt zwischen 0,05 Gew.-% und 0,3 Gew.-% oder bei einem Summen-Legierungsanteil an Mn, Fe, Ni und Co von über 0,6 Gew.-% bevorzugt zwischen 2 % und 50 %, noch bevorzugter zwischen 10 % und 30 % dieses Wertes von 0,05 Gew.-% und 0,3 Gew.-%.
- Der Anteil an Seltenen Erden, Chrom, Zirkonium, Titan und Beryllium beträgt in Summe zwischen 0,001 Gew.-% und 0,5 Gew.-%, bevorzugt zwischen 0,01 Gew.-% und 0,2 Gew.-%. Diese Elemente können neben zumindest zwei Hauptlegierungselementen zur Kornfeinung oder Aufhärtung zulegiert werden.
- Der Anteil an Selen beträgt maximal 0,1 Gew.-%, bevorzugt zwischen 0,0001 Gew.-% und 0,01 Gew.-%. Selen wirkt in cyanidischen Kupferelektrolyten als Glanzzusatz, auch die Mikrostreuung und Mikroeinebnung können verbessert werden. Höhere Selengehalt verspröden allerdings die Schicht.

Anstelle von Selen kann auch Schwefel oder Tellur eingesetzt werden.

Gemäß einer Ausführungsvariante ist vorgesehen, dass der Antifrettingschicht eine Schichtdicke zwischen 2 µm und 100 µm, bevorzugt zwischen 3 µm und 30 µm, insbesondere zwischen 4 µm und 15 µm aufweist. Durch Einhaltung der unteren Grenze von 2 µm für die Schichtdicke wird erreicht, dass die Antifrettingschicht auch nach Verschleiß der Rauheitsspitzen eine zusammenhängende Schicht bildet. Bei Schichtdicken von über 100 µm wurde eine verschlechterte Haftung der Antifrettingschicht am Untergrund durch Spannungen am Interface beobachtet.

Die Antifrettingschicht weist bevorzugt eine Mikrohärte nach Vickers bei einer Prüflast von 3 Pond zwischen HV 200 und HV 500, bevorzugt zwischen HV 230 und HV 400, insbesondere zwischen HV 250 und HV 350, auf, wodurch der Abrieb aufgrund von Mikrobewegungen des Gleitlagers im Gehäuse reduziert werden kann und somit die Reibkorrosion der Antifrettingschicht weiter reduziert werden kann. Über 500 HV ist die plastische Verformbarkeit meist so gering, dass einwirkende Kräfte lokal zur Rissbildung und zu Brüchen der Schicht führen. Unter 200 HV wird die Verschleißfestigkeit nicht in dem gewünschten Maße erreicht.

Vorzugsweise weisen die Kupfer-Mischkristall-Körner in der Antifrettingschicht eine Korngröße von größer 5 nm, bevorzugt von größer 10 nm, insbesondere von größer 50 nm, aufweisen. Es ist damit der kristalline Charakter der Kupferbasislegierung stärker ausgeprägt, wodurch in der Folge auch die von der voranstehend beschriebenen Orientierung abhängigen Eigenschaften stärker zu Ausdruck kommen.

Gemäß einer Ausführungsvariante ist die Antifrettingschicht bevorzugt im Wesentlichen frei von intermetallischen Phasen und erscheint in der XRD-Messung als Mischkristall mit Kupfer-Kristallgitter, wobei gemäß einer bevorzugten Ausführungsvariante diese aus Kupfer-Mischkristallen mit einer Gitterkonstante zwischen 0,3630 nm und 0,3750 nm besteht. Es wird dadurch die Ausbildung der bevorzugten Ausrichtung der Kupfer-Mischkristall-Körner in der Schicht aus der Kupferbasislegierung unterstützt bzw. zumindest nicht behindert, sodass die Antifrettingschicht ein homogeneres Eigenschaftsprofil aufweist.

Gemäß einer Ausführungsvariante ist vorgesehen, dass die Antifrettingschicht eine Schichtdicke von mindestens 50 %, insbesondere mindestens 150 %, und maximal 1000 %, bevorzugt maximal 300 %, der Rauhigkeit Rz der Stützschicht bzw. einer gegebenenfalls zwischen der Stützschicht und der Antifrettingschicht angeordneten Zwischenschicht aufweist. Es wird damit ein "Einebnungseffekt" der unter der Antifrettingschicht liegenden Schicht erreicht, wobei gleichzeitig durch die vorhandene Rauhigkeit eine bessere Haftung zwischen dieser Schicht und der Antifrettingschicht erzielt werden kann. Insbesondere wird damit ein Abrieb, der durch Profilspitzen des Rauhigkeitsprofils der unterhalb der Antifrettingschicht angeordneten Schicht entstehen könnte, besser vermieden.

Zur Erhöhung der Anpassungsfähigkeit des Mehrschichtgleitlagers an eine dieses aufnehmende Oberfläche des Gehäuses kann vorgesehen werden, dass die Antifrettingschicht eine Beschichtung aufweist, die weicher ist als die Antifrettingschicht. Bevorzugt besteht dabei diese Beschichtung aus einem Werkstoff besteht, der ausgewählt ist aus einer Gruppe umfassend Zinn, Blei, Bismut, polymerbasierte Gleitlacke.

Zum besseren Verständnis der Erfindung wird diese anhand der nachfolgenden Figur näher erläutert.

Es zeigt in schematisch vereinfachter Darstellung:

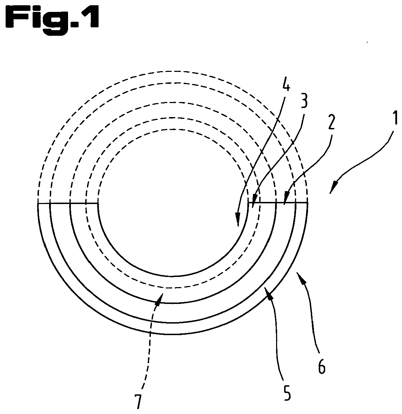

- Fig. 1: ein Mehrschichtgleitlager in Form einer Gleitlagerhalbschale in Seitenansicht.

Einführend sei festgehalten, dass in der Beschreibung gewählten Lageangaben, wie z.B. oben, unten, seitlich usw. auf die unmittelbar beschriebene sowie dargestellte Figur bezogen sind und sind diese bei einer Lageänderung sinngemäß auf die neue Lage zu übertragen.

Fig. 1 zeigt ein Mehrschichtgleitlager 1 in Form einer Gleitlagerhalbschale. Dargestellt ist eine dreischichtige Variante des Mehrschichtgleitlagers 1, bestehend aus einer Stützschicht 2, einer Gleitschicht 3, die auf einer Vorderseite 4 des Mehrschichtgleitlagers 2, die einem zu lagernden Bauteil zuwendbar ist, und einer Antifrettingschicht 5, die auf einer Rückseite 6 des Mehrschichtgleitlagers 1 und auf der Stützschicht 2 angeordnet ist. Gegebenenfalls kann eine Lagermetallschicht 7 zwischen der Gleitschicht 4 und der Stützschicht 2 angeordnet sein, wie dies in Fig. 1 strichliert angedeutet ist.

Der prinzipielle Aufbau derartiger Mehrschichtgleitlager 1, wie sie z.B. in Verbrennungskraftmaschinen Verwendung finden, ist aus dem Stand der Technik bekannt, sodass sich weitere Ausführungen hierzu erübrigen. Es sei jedoch erwähnt, dass weitere Schichten angeordnet werden können, also beispielsweise zwischen der Gleitschicht 4 und der Lagermetallschicht 3 und/oder zwischen Antifrettingschicht 5 und der Stützschicht 2 der eine Haftvermittlerschicht und/oder eine Diffusionssperrschicht, ebenso kann zwischen der Lagermetallschicht 3 und der Stützschicht 2 eine Haftmittelschicht angeordnet werden.

Im Rahmen der Erfindung kann das Mehrschichtgleitlager 1 auch anders ausgeführt sein, beispielsweise als Lagerbuchse, wie dies in Fig. 1 strichliert angedeutet ist. Ebenso sind Ausführungen wie Anlaufringe, axial laufende Gleitschuhe, oder dergleichen möglich.

Daneben besteht im Rahmen der Erfindung die Möglichkeit, dass auf die Lagermetallschicht 3 verzichtet wird, sodass die Gleitschicht 4 entweder direkt oder unter Zwischenanordnung eines Haftvermittlers und/oder einer Diffusionssperrschicht auf die Stützschicht 2 aufgebracht sein kann.

Die Stützmetallschicht 2 besteht bevorzugt aus Stahl, kann aber auch aus einem Werkstoff, der dem Mehrschichtgleitlager 1 die erforderliche Strukturfestigkeit verleiht bestehen. Derartige Werkstoffe sind aus dem Stand der Technik bekannt.

Für die Lagermetallschicht 3 bzw. die Gleitschicht 3 sowie die Zwischenschichten können die aus dem einschlägigen Stand der Technik bekannten Legierungen bzw. Werkstoffe verwendet werden, und sei diesbezüglich darauf verwiesen.

Die Antifrettingschicht 5 besteht aus einer Kupferbasislegierung, die neben Cu ein Legierungselement aus der Gruppe umfassend oder bestehend aus Zink, Indium, Silizium, Germanium, Antimon enthält oder ein Legierungselement aus der Gruppe umfassend oder bestehend aus Zink, Indium, Germanium, Zinn, Antimon sowie zumindest ein weiteres Element aus dieser Gruppe und/oder einer zweiten Gruppe umfassend oder bestehend aus Nickel, Kobalt, Eisen, Mangan, Bismut, Blei, Silber, Phosphor sowie aus der Herstellung stammende unvermeidbare Verunreinigungen enthält, wobei der Summenanteile dieser Legierungselemente mindesten 1 Gew.-% und maximal 30 Gew.-% beträgt, und wobei in der Kupferlegierung aus Kupfer und den Elementen gebildete Kupfer-Mischkristall-Körner vorliegen.

Der Anteil an Aluminium in der Kupferbasislegierung kann zwischen 2 Gew.-% und 12 Gew.-%, bevorzugt zwischen 4 Gew.-% und 8 Gew.-%, betragen.

Der Zinngehalt kann zwischen 5 Gew.-% und 25 Gew.-%, bevorzugt zwischen 8 Gew.-% und 19 Gew.-%, insbesondere zwischen 10 Gew.-% und 16 Gew.-%, betragen.

Der Zinkgehalt kann zwischen 0,5 Gew.-% und 25 Gew.-%, bevorzugt zwischen 1 Gew.-% und 5 Gew.-%, betragen.

Der Anteil an Mangan kann zwischen 0,2 Gew.-% und 5 Gew.-%, bevorzugt zwischen 0,2 Gew.-% und 2 Gew.-%, insbesondere zwischen 0,3 und 1 Gew.-%, betragen.

Der Anteil an Eisen kann zwischen 0,2 Gew.-% und 5 Gew.-%, bevorzugt zwischen 0,2 Gew.-% und 2 Gew.-%, insbesondere zwischen 0,3 Gew.-% und 1 Gew.-%, betragen.

Der Gehalt an Silizium kann zwischen 2 Gew.-% und 10 Gew.-%, vorzugsweise zwischen 3 Gew.-% und 5 Gew.-%, betragen.

Der Gehalt an Germanium kann zwischen 3 Gew.-% und 15 Gew.-%, vorzugsweise zwischen 4 Gew.-% und 10 Gew.-%, betragen.

Der Gehalt an Indium kann zwischen 0,2 Gew.-% und 20 Gew.-%, vorzugsweise zwischen 1 Gew.-% und 5 Gew.-%, insbesondere zwischen 2 Gew.-% und 4 Gew.-%, betragen.

Der Gehalt an Nickel kann zwischen 0,2 Gew.-% und 8 Gew.-%, vorzugsweise zwischen 0,5 Gew.-% und 5 Gew.-%, insbesondere zwischen 1 Gew.-% und 3 Gew.-%, betragen.

Der Gehalt an Kobalt kann zwischen 0,2 Gew.-% und 8 Gew.-%, vorzugsweise zwischen 0,5 Gew.-% und 5 Gew.-%, insbesondere zwischen 1 Gew.-% und 3 Gew.-%, betragen.

Der Gehalt an Bismut kann zwischen 1 Gew.-% und 25 Gew.-%, vorzugsweise zwischen 2 Gew.-% und 15 Gew.-%, insbesondere zwischen 5 Gew.-% und 10 Gew.-%, betragen.

Der Gehalt an Blei kann zwischen 1 Gew.-% und 25 Gew.-%, vorzugsweise zwischen 2 Gew.-% und 15 Gew.-%, insbesondere zwischen 5 Gew.-% und 10 Gew.-%, betragen.

Der Anteil an Silber kann zwischen 1 Gew.-% und 20 Gew.-%, bevorzugt zwischen 2 Gew.-% und 10 Gew.-%, betragen.

Der Gehalt an Antimon kann zwischen 0,2 Gew.-% und 15 Gew.-%, vorzugsweise zwischen 0,2 Gew.-% und 10 Gew.-%, insbesondere zwischen 1 Gew.-% und 5 Gew.-%, betragen.

Der Anteil an Phosphor kann zwischen 0,01 Gew.-% und 3 Gew.-%, bevorzugt zwischen 0,05 Gew.-% und 0,3 Gew.-% oder bei einem Summen-Legierungsanteil an Fe, Ni und Co von über 0,2 Gew.-% bevorzugt zwischen 10 % und 200 %, noch bevorzugter zwischen 50 % und 150 %, diese Wertes.

Der Anteil an Seltenen Erden, Chrom, Zirkonium, Titan und Beryllium kann in Summe zwischen 0,001 Gew.-% und 0,5 Gew.-%, bevorzugt zwischen 0,01 Gew.-% und 0,2 Gew.-%, betragen.

Der Anteil an Selen kann maximal 0,1 Gew.-%, insbesondere zwischen 0,0001 Gew.-% und 0,01 Gew.-%, betragen.

Anstelle von Selen kann auch Schwefel oder Tellur eingesetzt werden.

Vorzugsweise beträgt der Gehalt an einem oder mehreren der Elemente Silizium, Germanium, Indium, Zink, Nickel, Kobalt, Bismut, Blei und Antimon in Summe zwischen 0,2 Gew.-% und 20 Gew.-%.

Diese Kupferbasislegierungen werden bevorzugt galvanisch auf der Rückseite 6 auf dem jeweiligen Substrat, also beispielsweise der Stützschicht 2, abgeschieden. Der Elektrolyt hierfür kann cyanidhältig oder bevorzugt cyanidfrei sind. Bevorzugte Parameter für die Abscheidung sowie bevorzugte Badzusammensetzungen sind in den folgenden Beispielen wiedergegeben.

### Beispiel 1: cyanidhältiger Elektrolyt zur Abscheidung einer Cu-Sn-Zn Legierung

| | |
|---|---|
| Kupfer (I) | 0,25 mol/l - 0,35 mol/l |
| Zinn (IV) | 0,10 mol/l - 0,20 mol/l |
| Zink | 0,05 mol/l - 0,20 mol/l |
| Freies Cyanid | 0,30 mol/l - 0,45 mol/l |
| Freie Alkalität | 0,20 mol/l - 0,30 mol/l |
| Tartrat | 0 mol/l - 0,20 mol/l |
| Additiv | 0,5 g/l - 5 g/l |
| Temperatur | 55 °C - 65 °C |
| Stromdichte | 1 A/dm² - 4 A/dm² |

### Beispiel 2: cyanidhältiger Elektrolyt zur Abscheidung einer Cu-Ge-Zn Legierung

| | |
|---|---|
| Kupfer (I) | 0,25 mol/l - 0,35 mol/l |
| Germanium | 0,05 mol/l - 0,30 mol/l |
| Zink | 0,05 mol/l - 0,20 mol/l |
| Freies Cyanid | 0,30 mol/l - 0,45 mol/l |
| Freie Alkalität | 0,20 mol/l - 1,0 mol/l |
| Citrat | 0 mol/l - 0,20 mol/l |
| Additiv | 0,5 g/l - 5 g/l |
| Temperatur | 55 °C - 65 °C |
| Stromdichte | 1 A/dm² - 4 A/dm² |

### Beispiel 3: cyanidfreier Elektrolyt auf Methansulfonsäurebasis zur Abscheidung einer Cu-Sn-Bi Legierung

| | |
|---|---|
| Kupfer (II) | 0,25 mol/l - 0,35 mol/l |
| Zinn (II) | 0,10 mol/l - 0,20 mol/l |
| Bismut | 0,05 mol/l - 0,2 mol/l |
| Freie Säure | 0,8 mol/l - 2 mol/l |
| Additiv | 5 g/l- 50 g/l |
| Temperatur | 20 °C - 30 °C |
| Stromdichte | 0,5 A/dm² - 3 A/dm² |

### Beispiel 4: cyanidfreier Elektrolyt auf Tetrafluoroborsäurebasis zur Abscheidung einer Cu-Sn-Sb-Pb Legierung

| | |
|---|---|
| Kupfer (II) | 0,25 mol/l - 0,35 mol/l |
| Zinn (II) | 0,10 mol/l - 0,20 mol/l |
| Antimon (III) | 0,02 mol/l - 0,10 mol/l |
| Blei (II) | 0,05 mol/l - 0,5 mol/l |
| Freie Säure | 0,8 mol/l - 2 mol/l |
| Additiv | 5 g/l- 50 g/l |
| Temperatur | 20 °C - 30 °C |
| Stromdichte | 0,5 A/dm² - 3 A/dm² |

### Beispiel 5: cyanidfreier Elektrolyt auf Pyrophosphat- oder Phosphonatbasis zur Abscheidung einer Cu-Sn-In-Legierung

| | |
|---|---|
| Kupfer (II) | 0,10 mol/l - 0,40 mol/l |
| Zinn (II) | 0,05 mol/l - 0,50 mol/l |
| Indium | 0,05 mol/l - 0,50 mol/l |
| pH-Wert | 8 - 10 |
| Additiv | 0,5 g/l - 50 g/l |
| Temperatur | 40 °C - 80 °C |
| Stromdichte | 0,5 A/dm² - 5 A/dm² |

In der bevorzugten Ausführung des Elektrolyts enthält dieser neben den Salzen für die abzuscheidenden Metalle auch organische Verbindungen. Insbesondere sind dies im Falle cyanidischer Elektrolyte Polycarbonsäuresalze wie Citrat oder Tartrat, im Falle der nicht cyanidischen sauren Elektrolyte Naphthol oder Naphtholderivate oder Thioverbindungen. Dadurch wird erreicht, dass die erfindungsgemäße Ausrichtung über einen weiteren Bereich an Badparametern erhalten wird.

Folgende Salze können zur Abscheidung der Metalle verwendet werden:
Kupfer kann als Kupfer(II)tetrafluoroborat, Kupfer(II)methansulfonat, Kupfer(II)sulfat, Kupfer(II)pyrophosphat, Kupfer(I)cyanid, Kupfersalze von Hydroxy- und/oder Aminophosphonsäuren eingesetzt werden. Generell kann die Konzentration an Kupfer im Elektrolyt zwischen 0,05 mol/l und 1 mol/l betragen.

Zinn kann als Zinn(II)tetrafluoroborat, Zinn(II)methansulfonat, Zinn(II)sulfat, Zinn(II)pyrophosphat, Natriumstannat, Kaliumstannat, Zinn(II)salze von Hydroxy- und/oder Aminophosphonsäuren eingesetzt werden. Generell kann die Konzentration an Zinn im Elektrolyt bis zu 0,5 mol/l betragen.

Zink kann als Zink(II)tetrafluoroborat, Zink(II)methansulfonat, Zink(II)sulfat, Zink(II)pyrophosphat, Zinkoxid, Zinkcyanid, Zink(II)salze von Hydroxy- und/oder Aminophosphonsäuren eingesetzt werden. Generell kann die Konzentration an Zink im Elektrolyt bis zu 0,5 mol/l betragen.

Silizium kann als Pulver oder beispielsweise in Form von Siliziumcarbid dem Elektrolyten beigegeben werden um damit Dispersionsschichten auszubilden.

Germanium kann als Germaniumdioxid oder Natrium- oder Kaliumgermanat eingesetzt werden. Generell kann die Konzentration an Germanium im Elektrolyt bis zu 0,5 mol/l betragen.

Indium kann als Indiumoxid, Indiumcyanid, Indiumsulfat, Indiumfluoroborat, Indiummethansulfonat eingesetzt werden. Generell kann die Konzentration an Indium im Elektrolyt bis zu 0,5 mol/l betragen.

Nickel kann als Nickel(II)tetrafluoroborat, Nickel(II)methansulfonat, Nickel(II)sulfat, Ammonium-Nickel-Sulfat, Nickel(II)chlorid, Nickel(II)pyrophosphat, Nickel(II)oxid eingesetzt werden. Generell kann die Konzentration an Nickel im Elektrolyt bis zu 1 mol/l betragen.

Mangan, Cobalt und Eisen können in der gleichen Form und Konzentration wie Nickel eingesetzt werden.

Bismut kann als Bismuttrifluorid, Bismut(III)methansulfonat, Bismut(III)sulfat, Bismut(III)pyrophosphat, Bismutoxid, Natrium- oder Kaliumbismutat eingesetzt werden. Generell kann die Konzentration an Bismut im Elektrolyt bis zu 0,5 mol/l betragen.

Blei kann als Blei(II)tetrafluoroborat, Blei(II)methansulfonat, Blei(II)pyrophosphat, Bleiacetat, Blei(II)oxid, Natrium- oder Kaliumplumbat eingesetzt werden. Generell kann die Konzentration an Blei im Elektrolyt bis zu 0,3 mol/l betragen.

Antimon kann als Antimon(III)tetrafluoroborat, Antimontrifluorid, Antimon(III)oxid, Kaliumantimontartrat eingesetzt werden. Generell kann die Konzentration an Antimon im Elektrolyt bis zu 0,2 mol/l betragen.

Silber kann als Cyanid, Alkalisilbercyanid, Silbermethansulfonat, Silbernitrat eingesetzt werden. Generell kann die Konzentration an Antimon im Elektrolyt bis zu 0,5 mol/l betragen.

Phosphor kann als Phosphorige Säure, Alkaliphosphit, Alkalihypophosphit eingesetzt werden. Generell kann die Konzentration bis zu 2 mol/L betragen.

Selen kann als Selendioxid, Alkaliselenat oder Alkaliselenit eingesetzt werden. Generell kann die Konzentration an Selen im Elektrolyt zwischen 0,05 mmol/l und 5 mmol/l betragen.

Mögliche Stabilisatoren bzw. Grundelektrolyte, Leitsalze oder Komplexbildner sind: Alkalicyanide, Alkalihydroxide, Tetrafluoroborsäure, Flusssäure, Methansulfonsäure, Weinsäure und deren Alkali- und Ammoniumsalze, Citronensäure und deren Alkali- und Ammoniumsalze, Ammonium- und Alkalipyrophosphate, Phosphonsäure und deren Alkali- und Ammoniumsalze, 2,2-Ethylendithiodiethanol, Hydantion und dessen Derivate, Succinimid und dessen Derivate, Phenol - und Kresolsulfonsäuren, in einer Gesamtkonzentration zwischen 0,1 mol/l und 2 mol/l.

Mögliche Oxidationsinhibitoren in cyanidfreien Elektrolyten sind: Resorcin, Hydrochinon, Brenzkatechin, Pyrogallol, Formaldehyd, Methanol, in einer Gesamtkonzentration zwischen 0,03 mol/l und 0,3 mol/l.

Mögliche Additive sind: Phenolphthalein, Thioverbindungen und deren Derivate, Thioharnstoff und dessen Derivate, Alpha- oder Beta-Naphtol und deren Ethoxylate, Alpha- und Beta-Naphtholsulphonsäure und deren Ethoxylate, o-Toluidin, Hydroxychinolin, Ligninsulfonat, Butindiol, in einer Gesamtkonzentration zwischen 0,0005 mol/l und 0,05 mol/l, bevorzugt 0,002 mol/l und 0,02 mol/l und Gelatine, Leim, nichtionische und kationische Tenside, Aminoverbindungen, beispielsweise C8-C20-amidopropylamine und deren Derivate, Polyethylenglycol und dessen funktionalisierte Derivate, Pepton, Glycin, in einer Gesamtkonzentration zwischen 0 g/l- 50 g/l.

Es können jeweils auch Mischungen aus den voranstehend genannten Bestandteilen der Elektrolyte verwendet werden, also z.B. zumindest zwei Salze eines bzw. des jeweiligen Metalls und/oder zumindest zwei Stabilisatoren und/oder zumindest zwei Oxidationsinhibitoren und/oder zumindest zwei Additive.

Zu beachten ist, dass aus Sicherheitsgründen cyanidhältige Elektrolyte nur aus alkalischen Salzen oder Vormischungen hergestellt werden dürfen.

Die Legierungselemente können in Form der oben genannten, löslichen Verbindungen oder Komplexe einem entsprechenden Elektrolyten zugesetzt und aus diesem mit abgeschieden werden. Ebenso ist eine Legierungsbildung durch Eindiffusion der Elemente in die Schicht oder Mitabscheidung von im Elektrolyten suspendierten Partikeln möglich.

Neben der galvanischen Abscheidung sind aber auch andere Herstellungsmethoden der Kupferbasislegierung bzw. der Antifrettingschicht möglich. Beispielsweise kann die Kupferbasislegierung gegossen werden und ein Streifen daraus auf das Substrat aufgewalzt werden. Es ist aber auch ein direkter Guss auf das Substrat möglich, wodurch der zusätzliche Herstellungsschritt der Streifenbildung entfallen kann. Diese Verfahren sind prinzipiell aus dem Stand der Technik bekannt, sodass in diesem Zusammenhang hierauf verwiesen sei.

Es sind aber auch PVD- Verfahren, wie Sputtern, Aufdampfen, CVD-Verfahren, Ionenimplantationsverfahren, Flamm- und Plasmaspritz-Verfahren, Gießverfahren, Sinterverfahren oder Plattierverfahren zur Erzeugung der Antifrettingschicht 5 oder zu deren Modifikation, z.B. durch Ionenimplantationsverfahren, etc., möglich.

Die Abscheidung der jeweiligen Antifrettingschicht 5 kann auf einem bereits vorgeformten Mehrschichtgleitlager 1 erfolgen, also z.B. auf einer Gleitlagerhalbschale. Ebenso ist es im Rahmen der Erfindung möglich, dass die Antifrettingschicht 5 auf einem eben Substratstreifen, beispielsweise einem Stahlstreifen, abgeschieden wird, und die mechanische Umformung zum fertigen Mehrschichtgleitlager 1, beispielsweise durch Pressen, etc., erst in einem daran anschließenden Herstellungsschritt durchgeführt wird.

Es wurden auf diese Weise Antifrettingschichten 5 folgender Zusammensetzungen in Tabelle 1 hergestellt. Die Angaben zur Zusammensetzung beziehen sich dabei auf Gew.-%. Den Rest auf 100 Gew.-% bildet jeweils Kupfer.

**Tabelle 1: Zusammensetzungen von Antifrettingschichten 5**

| | Al | Si | Ge | Sn | In | Zn | Mn | Fe | Ni | Co | Bi | Pb | Ag | Sb | P | Sonstige |
|---|---|---|---|---|---|---|---|---|---|---|---|---|---|---|---|---|
| 1 | 2 | | 10 | | | | | 0,3 | | | | | | | 0,2 | |
| 2 | 4 | | | | | | 1 | | 1 | | | | | | | Cr: 0,1 |
| 3 | 6 | | | | | | | | | | | 8 | | | | |
| 4 | 8 | | | | | | | | | | | | 5 | | | |
| 5 | 12 | | | | | 2 | | | | | | | | | | |
| 6 | 5 | | | | | | | | | | | | | 2 | | |
| 7 | 7 | 1,5 | | | | | | | | | | | | | 0,1 | |
| 8 | | | | | | | | | 2 | | | | | | | |
| 9 | | 5 | | | 2 | | | | | | | | | | | |
| 10 | | | 4 | | | 5 | | | | | | | | | | |
| 11 | | | 10 | | | | | | | | | | 1 | | | |
| 12 | | | 15 | | 1 | | | | 5 | | | | | | | La: 0,1 |
| 13 | | | | 10 | 3 | | 1 | | | | | | | | | |
| 14 | | | | 15 | 2 | | | | | | | | | | | |
| 15 | | | | 20 | | 3 | | | | | | | | | | |
| 16 | | | | 10 | | 5 | | | | 0,5 | | | | | | |
| 17 | | | | 13 | | 1 | | | | | | | | | | Zr: 0,05 |
| 18 | | | | 10 | | 1 | | | | | | 10 | | | | |
| 19 | | | | 10 | | | | | | | 15 | | | | | |
| 20 | | | | 5 | | 5 | | | | | | 15 | | | | |
| 21 | | | | 5 | | | | | | | | | | 2 | | |
| 22 | | | 2 | 10 | | | | | | | | | | | | |
| 23 | | | | 17 | | 2 | | | | | 10 | | | | | |
| 24 | | | | 12 | | | | | | | | 9 | | | | |
| 25 | | 1 | 2 | 5 | | 5 | | | | | | | | | | |
| 26 | | | | 11 | 3 | | | | | | | | | | | |
| 27 | | | | 24 | | | | | | 5 | | | | | | |
| 28 | 3 | | | | | 15 | 2 | 2 | 1 | | | | | | | |
| 29 | | | | | | | 2 | 2 | | | | | 1,2 | | 0,8 | |
| 30 | | 10 | | | 10 | | | | | | | | | | | |
| 31 | | | | | 15 | | 5 | | | | | | | | | |
| 32 | | | | | 20 | | | 4 | | | | | | | | |
| 33 | | | | | | 25 | | | | 5 | | | | | | MoS2: 2 |
| 34 | | | | | 8 | | | | | | 20 | | | | | |
| 35 | | | | | 2 | | | | | | | 25 | | 1 | | |
| 36 | | | 8 | | | 1 | | | | | | | 20 | | | |

Für Vergleichszwecke wurden weiters CuSn-Legierungen entsprechend der GB 2315301 A1 auf Stahl (Beispiele 37 bis 40) und entsprechend der WO 02/48563 A1 (Beispiel 41) auf einem Ti-Pleuel hergestellt. Die Angaben zu den Zusammensetzungen in Tabelle 2 sind wiederum in Gew.-%.

**Tabelle 2: CuSn-Legierungen nach dem Stand der Technik**

| Nr. | Sn | Cu |
|---|---|---|
| 37 | 11 | Rest |
| 38 | 8,4 | Rest |
| 39 | 15 | Rest |
| 40 | 13 | Rest |
| 41 | 6 | Rest |

Auf dem Prüfstand zeigte sich, dass die erfindungsgemäßen zumindest ternären CuSn-Legierungen deutlich bessere Eigenschaften aufwiesen als die CuSn-Legierungen nach dem Stand der Technik. Es wurde dabei ein zylindrischer Stempel (die Gehäusebohrung darstellend) mit einem Druck von 10 MPa auf eine mit den entsprechenden Materialien beschichtete Platte (den Lagerrücken darstellend) gedrückt. Der Kontaktbereich wurde geölt. Stempel und Platte wurden einer Relativbewegung von 0,1 mm Amplitude bei einer Frequenz von 10 Hz ausgesetzt. Alle Versuche wurden bei 120°C über 1.000.000 Relativbewegungen durchgeführt. Nach Beendigung des Versuches wurden die Kontaktpunkte auf Platte und Stempel untersucht. Bei allen Proben bildete sich auf den Kontaktflächen Ölkohle. Der Grad der Schädigung wurde zwischen 1, keine Schädigung und 10, starker Frettingangriff eingestuft. Die Ergebnisse sind in Tabelle 3 zusammengefasst.

**Tabelle 3: Prüfergebnisse zu den Beispielen 1 bis 35**

| Nr. | Ergebnis | Nr. | Ergebnis | Nr. | Ergebnis |
|---|---|---|---|---|---|
| 1 | 3 | 2 | 5 | 3 | 4 |
| 4 | 2 | 5 | 3 | 6 | 5 |
| 7 | 3 | 8 | 6 | 9 | 4 |
| 10 | 4 | 11 | 4 | 12 | 5 |
| 13 | 3 | 14 | 3 | 15 | 5 |
| 16 | 3 | 17 | 4 | 18 | 3 |
| 19 | 3 | 20 | 3 | 21 | 4 |
| 22 | 5 | 23 | 2 | 24 | 2 |
| 25 | 4 | 26 | 4 | 27 | 4 |
| 28 | 3 | 29 | 3 | 30 | 2 |
| 31 | 5 | 32 | 5 | 33 | 4 |
| 34 | 3 | 35 | 3 | 36 | 2 |
| 37 | 10 | 38 | 8 | 39 | 9 |
| 40 | 7 | 41 | 6 | | |

Die Versuche wurden mit unterschiedlichen Stempelmaterialien (z.B. Stahl Gusseisen, Aluminium, Titan) und Oberflächenzuständen (Geschliffen, Kugelgestrahlt, ets.) und auch mit Platten ohne Beschichtung und mit unterschiedlichen Oberflächenzuständen durchgeführt, wobei sich die oben dargestellten Ergebnisse bestätigten. Auch die Versuchsparameter wie Pressung, Amplitude, Temperatur, Schmieröl wurden variiert. Die Ergebnisse wurden mit Ergebnissen aus Motorenversuchen und Untersuchungsergebnissen an Teilen aus dem Feld korreliert.

Es zeigt sich deutlich, dass alle erfindungsgemäßen Antifrettingschichten 5 und auch alle getesteten Schichten nach dem Stand der Technik im Vergleich zu unbeschichteten Materialien den Frettingangriff vermindern. Dieses Ergebnis ist nicht überraschend, daher wurden die einzelnen Ergebnisse hier nicht im Detail dargestellt. Entsprechend wurde auch die Bewertungsskala so angesetzt, dass zwischen guten und weniger guten Beschichtungen besser unterschieden werden kann, wobei nochmals betont werden muss, dass ein beschichteter Prüfteil mit einer Bewertung von 9 oder gar 10 (starker Fretting-Angriff) in der Regel weit weniger geschädigt war als eine unbeschichtete Prüfpaarung beispielsweise Stahlplatte gegen Stahlstempel oder Titanplatte gegen Stahlstempel.

Umso überraschender ist, dass mit erfindungsgemäßen Antifrettingschichten 5 im Vergleich zu den Schichten nach dem Stand der Technik eine weitere, deutliche Verminderung der Schädigung durch Fretting erzielt werden kann.

Binäre Legierungen für die Antifrettingschicht 5 in den voranstehend angegebenen Mengenbereichen haben eine Bewertung zwischen 4 und 6.

Gemäß einer bevorzugten Ausführungsvariante der Antifrettingschicht 5 weist diese eine Schichtdicke zwischen 2 µm und 100 µm, bevorzugt zwischen 3 µm und 30 µm, insbesondere zwischen 4 µm und 15 µm auf, wie dies bereits voranstehend ausgeführt wurde.

Wie bereist voranstehend ausgeführt, weist die Antifrettingschicht 5 eine Schichtdicke von mindestens 50 %, insbesondere mindestens 150 %, und maximal 1000 %, bevorzugt maximal 300 %, der Rauhigkeit Rz der Stützschicht bzw. einer gegebenenfalls zwischen der Stützschicht und der Antifrettingschicht angeordneten Zwischenschicht auf.

Es wurden hierzu ebenfalls Tests durchgeführt. Die Ergebnisse sind in Tabelle 4 zusammengefasst.

**Tabelle 4: Untersuchung des Einflusses der Schichtdicke auf die Qualität der Antifrettingschicht 5 (Untergrund geschliffen, Rz = 5 µm)**

| | Schichtdicke [µm] | Bewertung |
|---|---|---|
| CuSn13Zn3 | 1 | 10 |
| CuSn13Zn3 | 4 | 5 |
| CuSn13Zn3 | 12 | 3 |
| CuSn13Zn3 | 25 | 4 |
| CuSn13Zn3 | 100 | 5 |
| CuSn13Zn3 | 500 | 9 |

Vorzugsweise weist die Antifrettingschicht 5 aus voranstehend genannten Gründen eine Mikrohärte nach Vickers bei einer Prüflast von 3 Pond zwischen HV 200 und HV 500, bevorzugt zwischen HV 230 und HV 400, insbesondere zwischen HV 250 und HV 350, auf.

Auswertungen von Röntgenbeugungsuntersuchungen haben gezeigt, dass eine Verbesserung der Eigenschaften der Antifrettingschicht 5 auftritt, wenn die Kupfer-Mischkristall-Körner eine Korngröße von größer 5 nm, bevorzugt von größer 10 nm, insbesondere von größer 50 nm, aufweisen.

XRD-Messungen der Antifrettingschicht 5 haben zudem gezeigt, dass Kupferbasislegierungen bessere Eigenschaften aufweisen, wenn diese im Wesentlichen frei von intermetallischen Phasen sind und als Mischkristall mit Kupfer-Kristallgitter erscheint, wobei besonders bevorzugt ist, wenn diese Kupferbasislegierungen aus Kupfer-Mischkristallen mit einer Gitterkonstante zwischen 0,3630 nm und 0,3750 nm bestehen.

Die Antifrettingschicht 5 kann zudem aus voranstehenden Gründen eine Beschichtung aufweisen, die weicher ist als die Antifrettingschicht 5, wobei die Beschichtung bevorzugt aus einem Werkstoff besteht, der ausgewählt ist aus einer Gruppe umfassend Zinn, Blei, Bismut, polymerbasierte Gleitlacke. Prinzipiell sind sämtliche Gleitlacke verwendbar, die im Bereich von Gleitlagern bekannt sind. Bevorzugt wird jedoch ein Gleitlack verwendet, der in trockenem Zustand aus 40 Gew.-% bis 45 Gew.-% MoS₂, 20 Gew.-% bis 25 Gew.-% Graphit und 30 Gew.-% bis 40 Gew.-% Polyamidimid besteht, wobei gegebenenfalls noch Hartpartikel, wie z.B. Oxide, Nitride oder Carbide, im dem Gleitlack in einem Anteil von in Summe maximal 20 Gew.-% enthalten sein können, die einen Anteil der Festschmierstoffe ersetzen. Der Ordnung halber sei abschließend darauf hingewiesen, dass zum besseren Verständnis des Aufbaus des Mehrschichtgleitlagers 1 dieses bzw. dessen Bestandteile teilweise unmaßstäblich und/oder vergrößert und/oder verkleinert dargestellt wurden.

### Bezugszeichenaufstellung

- 1: Mehrschichtgleitlager
- 2: Stützschicht
- 3: Gleitschicht
- 4: Vorderseite
- 5: Antifrettingschicht
- 6: Rückseite
- 7: Lagermetallschicht

## Patentansprüche

1. Mehrschichtgleitlager (1) mit einer, einem zum lagernden Element zuwendbaren Vorderseite (4) und einer dieser gegenüberliegenden Rückseite (6), umfassend eine Stützschicht (2), eine auf der Vorderseite (4) angeordnete Gleitschicht (3) sowie eine auf der Rückseite (6) angeordnete Antifrettingschicht (5), wobei die Antifrettingschicht (5) aus einer Kupferbasislegierung mit Kupfer-Mischkristall-Körnern besteht und wobei die Kupferbasislegierung der Antifrettingschicht (5) durch eine binäre Legierung mit einem Legierungselement aus der Gruppe Zink, Indium, Silizium, Germanium, Antimon oder durch eine zumindest ternäre Legierung mit einem Legierungselement aus der Gruppe Zink, Indium, Germanium, Zinn, Antimon sowie zumindest einem weiteren Element aus dieser Gruppe und/oder der weiteren Gruppe Nickel, Kobalt, Eisen, Mangan, Bismut, Blei, Silber, Phosphor, gebildet ist, gegebenenfalls mit aus der Herstellung stammenden, unvermeidbaren Verunreinigungen, wobei der Summenanteil dieser Legierungselemente mindestens 1 Gew.-% und maximal 30 Gew.-% beträgt, mit der Maßgabe folgender Mengenanteile für die Legierungselemente, falls das jeweilige Element in der Kupferbasislegierung vorhanden ist:
- dass der Anteil an Zink in der Kupferbasislegierung zwischen 0,5 Gew.-% und 25 Gew.-% beträgt,
- dass der Anteil an Indium in der Kupferbasislegierung zwischen 0,2 Gew.-% und 20 Gew.-% beträgt,
- dass der Anteil an Silizium in der Kupferbasislegierung zwischen 2 Gew.-% und 10 Gew.-% beträgt,
- dass der Anteil an Germanium in der Kupferbasislegierung zwischen 3 Gew.-% und 15 Gew.-% beträgt,
- dass der Anteil an Antimon in der Kupferbasislegierung zwischen 0,2 Gew.-% und 15 Gew.-% beträgt,
- dass der Anteil an Zinn in der Kupferbasislegierung zwischen 5 Gew.-% und 25 Gew.-% beträgt,
- der Anteil an Nickel in der Kupferbasislegierung zwischen 0,5 Gew.-% und 5 Gew.-% beträgt,
- dass der Anteil an Kobalt in der Kupferbasislegierung zwischen 0,2 Gew.-% und 8 Gew.-% beträgt,
- dass der Anteil an Eisen in der Kupferbasislegierung zwischen 0,2 Gew.-% und 5 Gew.-% beträgt,
- dass der Anteil an Mangan in der Kupferbasislegierung zwischen 0,2 Gew.-% und 5 Gew.-% beträgt,
- dass der Anteil an Bismut in der Kupferbasislegierung zwischen 1 Gew.-% und 25 Gew.-% beträgt,
- der Anteil an Blei in der Kupferbasislegierung zwischen 1 Gew.-% und 25 Gew.-% beträgt,
- dass der Anteil an Silber in der Kupferbasislegierung zwischen 1 Gew.-% und 20 Gew.-% beträgt,
- dass der Anteil an Phosphor zwischen 0,01 Gew.-% und 3 Gew.-% beträgt.

2. Mehrschichtgleitlager (1) nach Anspruch 1, **dadurch gekennzeichnet, dass** der Anteil an Zinn in der Kupferbasislegierung zwischen 8 Gew.-% und 19 Gew.-%, insbesondere zwischen 10 Gew.-% und 16 Gew.-%, beträgt.

3. Mehrschichtgleitlager (1) nach Anspruch 1 oder 2, **dadurch gekennzeichnet, dass** die Kupferbasislegierung weiter Aluminium enthält, wobei der Anteil an Aluminium in der Kupferbasislegierung zwischen 2 Gew.-% und 12 Gew.-%, bevorzugt zwischen 4 Gew.-% und 8 Gew.-%, beträgt.

4. Mehrschichtgleitlager (1) nach einem der Ansprüche 1 bis 3, **dadurch gekennzeichnet, dass** der Anteil an Silizium in der Kupferbasislegierung zwischen 3 Gew.-% und 5 Gew.-% beträgt.

5. Mehrschichtgleitlager (1) nach einem der Ansprüche 1 bis 4, **dadurch gekennzeichnet, dass** der Anteil an Germanium in der Kupferbasislegierung zwischen 4 Gew.-% und 10 Gew.-% beträgt.

6. Mehrschichtgleitlager (1) nach einem der Ansprüche 1 bis 5, **dadurch gekennzeichnet, dass** der Anteil an Indium in der Kupferbasislegierung zwischen 1 Gew.-% und 5 Gew.-%, insbesondere zwischen 2 Gew.-% und 4 Gew.-%, beträgt.

7. Mehrschichtgleitlager (1) nach einem der Ansprüche 1 bis 6, **dadurch gekennzeichnet, dass** der Anteil an Zink in der Kupferbasislegierung zwischen 1 Gew.-% und 5 Gew.-% beträgt.

8. Mehrschichtgleitlager (1) nach einem der Ansprüche 1 bis 7, **dadurch gekennzeichnet, dass** der Anteil an Mangan in der Kupferbasislegierung zwischen 0,2 Gew.-% und 2 Gew.-%, insbesondere zwischen 0,3 Gew.-% und 1 Gew.-%, beträgt.

9. Mehrschichtgleitlager (1) nach einem der Ansprüche 1 bis 8, **dadurch gekennzeichnet, dass** der Anteil an Eisen in der Kupferbasislegierung zwischen 0,2 Gew.-% und 2 Gew.-%, insbesondere zwischen 0,3 Gew.-% und 1 Gew.-%, beträgt.

10. Mehrschichtgleitlager (1) nach einem der Ansprüche 1 bis 9, **dadurch gekennzeichnet, dass** der Anteil an Nickel in der Kupferbasislegierung zwischen 1 Gew.-% und 3 Gew.-% beträgt.

11. Mehrschichtgleitlager (1) nach einem der Ansprüche 1 bis 10, **dadurch gekennzeichnet, dass** der Anteil an Kobalt in der Kupferbasislegierung zwischen 0,5 Gew.-% und 5 Gew.-%, insbesondere zwischen 1 Gew.-% und 3 Gew.-%, beträgt.

12. Mehrschichtgleitlager (1) nach einem der Ansprüche 1 bis 11, **dadurch gekennzeichnet, dass** der Anteil an Bismut in der Kupferbasislegierung zwischen 2 Gew.-% und 15 Gew.-%, insbesondere zwischen 5 Gew.-% und 10 Gew.-%, beträgt.

13. Mehrschichtgleitlager (1) nach einem der Ansprüche 1 bis 12, **dadurch gekennzeichnet, dass** der Anteil an Blei in der Kupferbasislegierung zwischen 2 Gew.-% und 15 Gew.-%, insbesondere zwischen 5 Gew.-% und 10 Gew.-%, beträgt.

14. Mehrschichtgleitlager (1) nach einem der Ansprüche 1 bis 13, **dadurch gekennzeichnet, dass** der Anteil an Silber in der Kupferbasislegierung zwischen 2 Gew.-% und 10 Gew.-% beträgt.

15. Mehrschichtgleitlager (1) nach einem der Ansprüche 1 bis 14, **dadurch gekennzeichnet, dass** der Anteil an Antimon in der Kupferbasislegierung zwischen 0,2 Gew.-% und 10 Gew.-%, insbesondere zwischen 1 Gew.-% und 5 Gew.-%, beträgt.

16. Mehrschichtgleitlager (1) nach einem der Ansprüche 1 bis 15, **dadurch gekennzeichnet, dass** der Anteil an Phosphor zwischen 0,05 Gew.-% und 0,3 Gew.-% oder bei einem Summen-Legierungsanteil an Mn, Fe, Ni und Co von über 0,6 Gew.-% bevorzugt zwischen 2 % und 50 %, noch bevorzugter zwischen 10 % und 30 %, dieses Wertes von 0,05 Gew.-% und 0,3 Gew.-% beträgt.

17. Mehrschichtgleitlager (1) nach einem der Ansprüche 1 bis 16, **dadurch gekennzeichnet, dass** die Legierung Selen enthält, wobei der Anteil an Selen maximal 0,1 Gew.-%, bevorzugt zwischen 0,0001 Gew.-% und 0,01 Gew.-%, beträgt.

18. Mehrschichtgleitlager (1) nach einem der Ansprüche 1 bis 17, **dadurch gekennzeichnet, dass** der Summenanteil an Mangan, Eisen, Nickel und Cobalt maximal 10 Gew.-%, vorzugsweise maximal 6 Gew.-%, beträgt.

19. Mehrschichtgleitlager (1) nach einem der Ansprüche 1 bis 18, **dadurch gekennzeichnet, dass** die Kupferbasislegierung zumindest ein weiteres Element aus einer dritten Gruppe umfassend bzw. bestehend aus Seltenen Erden, Chrom, Zirkonium, Titan und Beryllium in einem Anteil von in Summe zwischen 0,001 Gew.-% und 0,5 Gew.-%, bevorzugt zwischen 0,01 Gew.-% und 0,2 Gew.-%, enthält.

20. Mehrschichtgleitlager (1) nach einem der Ansprüche 1 bis 19, **dadurch gekennzeichnet, dass** die Antifrettingschicht (5) eine Schichtdicke zwischen 2 µm und 100 µm, bevorzugt zwischen 3 µm und 30 µm, insbesondere zwischen 4 µm und 15 µm aufweist.

21. Mehrschichtgleitlager (1) nach einem der Ansprüche 1 bis 20, **dadurch gekennzeichnet, dass** die Antifrettingschicht (5) eine Mikrohärte nach Vickers bei einer Prüflast von 3 Pond zwischen HV 200 und HV 500, bevorzugt zwischen HV 230 und HV 400, insbesondere zwischen HV 250 und HV 350, aufweist.

22. Mehrschichtgleitlager (1) nach einem der Ansprüche 1 bis 21, **dadurch gekennzeichnet, dass** die Kupfer-Mischkristall-Körner eine Korngröße von größer 5 nm, bevorzugt von größer 10 nm, insbesondere von größer 50 nm, aufweisen.

23. Mehrschichtgleitlager (1) nach einem der Ansprüche 1 bis 22, **dadurch gekennzeichnet, dass** die Antifrettingschicht (5) im Wesentlichen frei von intermetallischen Phasen ist und in der XRD-Messung als Mischkristall mit Kupfer-Kristallgitter erscheint.

24. Mehrschichtgleitlager (1) nach Anspruch 23, **dadurch gekennzeichnet, dass** die Antifrettingschicht (5) aus Kupfer-Mischkristallen mit einer Gitterkonstante zwischen 0,3630 nm und 0,3750 nm besteht.

25. Mehrschichtgleitlager (1) nach einem der Ansprüche 1 bis 24, **dadurch gekennzeichnet, dass** die Antifrettingschicht (5) eine Schichtdicke von mindestens 50 %, insbesondere mindestens 150 %, und maximal 1000 %, bevorzugt maximal 300 %, der Rauhigkeit Rz der Stützschicht (5) bzw. einer gegebenenfalls zwischen der Stützschicht (2) und der Antifrettingschicht (5) angeordneten Zwischenschicht aufweist.

26. Mehrschichtgleitlager (1) nach einem der Ansprüche 1 bis 25, **dadurch gekennzeichnet, dass** die Antifrettingschicht (5) eine Beschichtung aufweist, die weicher ist als die Antifrettingschicht (5).

27. Mehrschichtgleitlager (1) nach Anspruch 26, **dadurch gekennzeichnet, dass** die Beschichtung aus einem Werkstoff besteht, der ausgewählt ist aus einer Gruppe umfassend Zinn, Blei, Bismut, polymerbasierte Gleitlacke.

## Claims

1. A multi-layered plain bearing (1) with a front side (4) facing the element to be supported and a rear side (6) opposite thereto, comprising a support layer (2), an anti-frictional layer (3) disposed on the front side (4) and an anti-fretting layer (5) disposed on the rear side (6), wherein the anti-fretting layer (5) consists of a copper-based alloy with copper mixed-crystal grains and wherein the copper-based alloy of the anti-fretting layer (5) is formed by a binary alloy with an alloying element from the group zinc, indium, silicon, germanium, antimony or by an at least ternary alloy with an alloying element from the group zinc, indium, germanium, tin, antimony and at least one further element from said group and/or from the additional group nickel, cobalt, iron, manganese, bismuth, lead, silver, phosphorus, possibly with unavoidable impurities originating from production, wherein the total proportion of said alloying elements is at least 1% by weight and a maximum of 30% by weight, with the condition that the mass fractions for the alloying elements are as follows in the event that the respective element is present in the copper-based alloy:
- the proportion of zinc in the copper-based alloy is between 0.5% by weight and 25% by weight,
- the proportion of indium in the copper-based alloy is between 0.2% by weight and 20% by weight,
- the proportion of silicon in the copper-based alloy is between 2% by weight and 10% by weight,
- the proportion of germanium in the copper-based alloy is between 3% by weight and 15% by weight,
- the proportion of antimony in the copper-based alloy is between 0.2% by weight and 15% by weight,
- the proportion of tin in the copper-based alloy is between 5% by weight and 25% by weight,
- the proportion of nickel in the copper-based alloy is between 0.5% by weight and 5% by weight,
- the proportion of cobalt in the copper-based alloy is between 0.2% by weight and 8% by weight,
- the proportion of iron in the copper-based alloy is between 0.2% by weight and 5% by weight,
- the proportion of manganese in the copper-based alloy is between 0.2% by weight and 5% by weight,
- the proportion of bismuth in the copper-based alloy is between 1% by weight and 25% by weight,
- the proportion of lead in the copper-based alloy is between 1% by weight and 25% by weight,
- the proportion of silver in the copper-based alloy is between 1% by weight and 20% by weight,
- the proportion of phosphorus in the copper-based alloy is between 0.01% by weight and 3% by weight.

2. The multi-layered plain bearing (1) as claimed in claim 1, **characterized in that** the proportion of tin in the copper-based alloy is between 8% by weight and 19% by weight, in particular between 10% by weight and 16% by weight.

3. The multi-layered plain bearing (1) as claimed in claim 1 or claim 2, **characterized in that** the copper-based alloy furthermore contains aluminium, wherein the proportion of aluminium in the copper-based alloy is between 2% by weight and 12% by weight, preferably between 4% by weight and 8% by weight.

4. The multi-layered plain bearing (1) as claimed in one of claims 1 to 3, **characterized in that** the proportion of silicon in the copper-based alloy is between 3% by weight and 5% by weight.

5. The multi-layered plain bearing (1) as claimed in one of claims 1 to 4, **characterized in that** the proportion of germanium in the copper-based alloy is between 4% by weight and 10% by weight.

6. The multi-layered plain bearing (1) as claimed in one of claims 1 to 5, **characterized in that** the proportion of indium in the copper-based alloy is between 1% by weight and 5% by weight, in particular between 2% by weight and 4% by weight.

7. The multi-layered plain bearing (1) as claimed in one of claims 1 to 6, **characterized in that** the proportion of zinc in the copper-based alloy is between 1% by weight and 5% by weight.

8. The multi-layered plain bearing (1) as claimed in one of claims 1 to 7, **characterized in that** the proportion of manganese in the copper-based alloy is between 0.2% by weight and 2% by weight, in particular between 0.3% by weight and 1% by weight.

9. The multi-layered plain bearing (1) as claimed in one of claims 1 to 8, **characterized in that** the proportion of iron in the copper-based alloy is between 0.2% by weight and 2% by weight, in particular between 0.3% by weight and 1% by weight.

10. The multi-layered plain bearing (1) as claimed in one of claims 1 to 9, **characterized in that** the proportion of nickel in the copper-based alloy is between 1% by weight and 3% by weight.

11. The multi-layered plain bearing (1) as claimed in one of claims 1 to 10, **characterized in that** the proportion of cobalt in the copper-based alloy is between 0.5% by weight and 5% by weight, in particular between 1% by weight and 3% by weight.

12. The multi-layered plain bearing (1) as claimed in one of claims 1 to 11, **characterized in that** the proportion of bismuth in the copper-based alloy is between 2% by weight and 15% by weight, in particular between 5% by weight and 10% by weight.

13. The multi-layered plain bearing (1) as claimed in one of claims 1 to 12, **characterized in that** the proportion of lead in the copper-based alloy is between 2% by weight and 15% by weight, in particular between 5% by weight and 10% by weight.

14. The multi-layered plain bearing (1) as claimed in one of claims 1 to 13, **characterized in that** the proportion of silver in the copper-based alloy is between 2% by weight and 10% by weight.

15. The multi-layered plain bearing (1) as claimed in one of claims 1 to 14, **characterized in that** the proportion of antimony in the copper-based alloy is between 0.2% by weight and 10% by weight, in particular between 1% by weight and 5% by weight.

16. The multi-layered plain bearing (1) as claimed in one of claims 1 to 15, **characterized in that** the proportion of phosphorus is between 0.05% by weight and 0.3% by weight or, when the total alloying amount of Mn, Fe, Ni and Co is over 0.6% by weight, preferably between 2% and 50%, more preferably between 10% and 30%, said proportion is from 0.05% by weight to 0.3% by weight.

17. The multi-layered plain bearing (1) as claimed in one of claims 1 to 16, **characterized in that** the alloy contains selenium, wherein the proportion of selenium is a maximum of 0.1% by weight, preferably between 0.0001% by weight and 0.01% by weight.

18. The multi-layered plain bearing (1) as claimed in one of claims 1 to 17, **characterized in that** the total amount of manganese, iron, nickel and cobalt is a maximum of 10% by weight, preferably a maximum of 6% by weight.

19. The multi-layered plain bearing (1) as claimed in one of claims 1 to 18, **characterized in that** the copper-based alloy contains at least one further element from a third group comprising or consisting of rare earths, chromium, zirconium, titanium and beryllium in an amount of a total of between 0.001% by weight and 0.5% by weight, preferably between 0.01% by weight and 0.2% by weight.

20. The multi-layered plain bearing (1) as claimed in one of claims 1 to 19, **characterized in that** the anti-fretting layer (5) has a layer thickness of between 2 µm and 100 µm, preferably between 3 µm and 30 µm, in particular between 4 µm and 15 µm.

21. The multi-layered plain bearing (1) as claimed in one of claims 1 to 20, **characterized in that** the anti-fretting layer (5) has a Vickers microhardness under a test load of 3 Pond of between HV 200 and HV 500, preferably between HV 230 and HV 400, in particular between HV 250 and HV 350.

22. The multi-layered plain bearing (1) as claimed in one of claims 1 to 21, **characterized in that** the copper mixed-crystal grains have a grain size of more than 5 nm, preferably of more than 10 nm, in particular of more than 50 nm.

23. The multi-layered plain bearing (1) as claimed in one of claims 1 to 22, **characterized in that** the anti-fretting layer (5) is substantially free from intermetallic phases and appears in the XRD measurement as a mixed crystal with copper crystal lattice.

24. The multi-layered plain bearing (1) as claimed in claim 23, **characterized in that** the ant-fretting layer (5) is produced from copper mixed-crystals with a lattice constant of between 0.3630 nm and 0.3750 nm.

25. The multi-layered plain bearing (1) as claimed in one of claims 1 to 24, **characterized in that** the anti-fretting layer (5) has a layer thickness of at least 50%, in particular at least 150%, and a maximum of 1000%, preferably a maximum of 300%, of the roughness Rz of the support layer (5) or an intermediate layer optionally disposed between the support layer (2) and the anti-fretting layer (5).

26. The multi-layered plain bearing (1) as claimed in one of claims 1 to 25, **characterized in that** the anti-fretting layer (5) has a coating which is softer than the anti-fretting layer (5).

27. The multi-layered plain bearing (1) as claimed in claim 26, **characterized in that** the coating is produced from a material which is selected from a group comprising tin, lead, bismuth and polymer-based anti-frictional paints.

## Revendications

1. Palier lisse multicouche (1), comportant une face avant (4) pouvant être dirigée vers l'élément à loger, et une face arrière (6), opposée à celle-ci, comprenant une couche d'appui (2), une couche de glissement (3) disposée sur la face avant (4), ainsi qu'une couche anti-usure de contact (5) disposée sur la face arrière (6), la couche anti-usure de contact (5) étant constituée d'un alliage à base de cuivre avec des grains d'une solution solide de cuivre, et l'alliage à base de cuivre de la couche anti-usure de contact (5) étant formée d'un alliage binaire, avec un élément d'alliage du groupe consistant en le zinc, l'indium, le silicium, le germanium, l'antimoine, ou d'un alliage au moins ternaire, avec un élément d'alliage du groupe consistant en le zinc, l'indium, le germanium, l'étain, l'antimoine, ainsi qu'au moins un élément supplémentaire de ce groupe et/ou du groupe supplémentaire consistant en le nickel, le cobalt, le fer, le manganèse, le bismuth, le plomb, l'argent, le phosphore, éventuellement avec les impuretés inévitables découlant de la fabrication, la teneur totale en ces éléments d'alliage étant d'au moins 1 % en poids et au maximum 30 % en poids, à la condition que, si l'élément considéré est présent dans l'alliage base de cuivre, on ait les teneurs pondérales suivantes en les éléments d'alliage :
- une teneur en zinc de l'alliage à base de cuivre comprise entre 0,5 % en poids et 25 % en poids,
- une teneur en indium de l'alliage à base de cuivre comprise entre 0,2 % en poids et 20 % en poids,
- une teneur en silicium de l'alliage à base de cuivre comprise entre 2 % en poids et 10 % en poids,
- une teneur en germanium de l'alliage à base de cuivre comprise entre 3 % en poids et 15 % en poids,
- une teneur en antimoine de l'alliage à base de cuivre comprise entre 0,2 % en poids et 15 % en poids,
- une teneur en étain de l'alliage à base de cuivre comprise entre 5 % en poids et 25 % en poids,
- une teneur en nickel de l'alliage à base de cuivre comprise entre 0,5 % en poids et 5 % en poids,
- une teneur en cobalt de l'alliage à base de cuivre comprise entre 0,2 % en poids et 8 % en poids,
- une teneur en fer de l'alliage à base de cuivre comprise entre 0,2 % en poids et 5 % en poids,
- une teneur en manganèse de l'alliage à base de cuivre comprise entre 0,2 % en poids et 5% en poids,
- une teneur en bismuth de l'alliage à base de cuivre comprise entre 1 % en poids et 25 % en poids,
- une teneur en plomb de l'alliage à base de cuivre comprise entre 1 % en poids et 25 % en poids,
- une teneur en argent de l'alliage à base de cuivre comprise entre 1 % en poids et 20 % en poids,
- une teneur en phosphore comprise entre 0,01 % en poids et 3 % en poids.

2. Palier lisse multicouche (1) selon la revendication 1, **caractérisé en ce que** la teneur en étain de l'alliage à base de cuivre est comprise entre 8 % en poids et 19 % en poids, en particulier entre 10 % en poids et 16 % en poids.

3. Palier lisse multicouche (1) selon la revendication 1 ou 2, **caractérisé en ce que** l'alliage à base de cuivre contient en outre de l'aluminium, la teneur en aluminium de l'alliage à base de cuivre étant comprise entre 2 % en poids et 12 % en poids, de préférence entre 4 % en poids et 8 % en poids.

4. Palier lisse multicouche (1) selon l'une des revendications 1 à 3, **caractérisé en ce que** la teneur en silicium de l'alliage à base de cuivre est comprise entre 3 % en poids et 5 % en poids.

5. Palier lisse multicouche (1) selon l'une des revendications 1 à 4, **caractérisé en ce que** la teneur en germanium de l'alliage à base de cuivre est comprise entre 4 % en poids et 10 % en poids.

6. Palier lisse multicouche (1) selon l'une des revendications 1 à 5, **caractérisé en ce que** la teneur en indium de l'alliage à base de cuivre est comprise entre 1 % en poids et 5 % en poids, en particulier entre 2 % en poids et 4 % en poids.

7. Palier lisse multicouche (1) selon l'une des revendications 1 à 6, **caractérisé en ce que** la teneur en zinc de l'alliage à base de cuivre est comprise entre 1 % en poids et 5 % en poids.

8. Palier lisse multicouche (1) selon l'une des revendications 1 à 7, **caractérisé en ce que** la teneur en manganèse de l'alliage à base de cuivre est comprise entre 0,2 % en poids et 2 % en poids, en particulier entre 0,3 % en poids et 1 % en poids.

9. Palier lisse multicouche (1) selon l'une des revendications 1 à 8, **caractérisé en ce que** la teneur en fer de l'alliage à base de cuivre est comprise entre 0,2 % en poids et 2 % en poids, en particulier entre 0,3 % en poids et 1 % en poids.

10. Palier lisse multicouche (1) selon l'une des revendications 1 à 9, **caractérisé en ce que** la teneur en nickel de l'alliage à base de cuivre est comprise entre 1 % en poids et 3 % en poids.

11. Palier lisse multicouche (1) selon l'une des revendications 1 à 10, **caractérisé en ce que** la teneur en cobalt de l'alliage à base de cuivre est comprise entre 0,5 % en poids et 5 % en poids, en particulier entre 1 % en poids et 3 % en poids.

12. Palier lisse multicouche (1) selon l'une des revendications 1 à 11, **caractérisé en ce que** la teneur en bismuth de l'alliage à base de cuivre est comprise entre 2 % en poids et 15 % en poids, en particulier entre 5 % en poids et 10 % en poids.

13. Palier lisse multicouche (1) selon l'une des revendications 1 à 12, **caractérisé en ce que** la teneur en plomb de l'alliage à base de cuivre est comprise entre 2 % en poids et 15 % en poids, en particulier entre 5 % en poids et 10 % en poids.

14. Palier lisse multicouche (1) selon l'une des revendications 1 à 13, **caractérisé en ce que** la teneur en argent de l'alliage à base de cuivre est comprise entre 2 % en poids et 10 % en poids.

15. Palier lisse multicouche (1) selon l'une des revendications 1 à 14, **caractérisé en ce que** la teneur en antimoine de l'alliage à base de cuivre est comprise entre 0,2 % en poids et 10 % en poids, en particulier entre 1 % en poids et 5 % en poids.

16. Palier lisse multicouche (1) selon l'une des revendications 1 à 15, **caractérisé en ce que** la teneur en phosphore est comprise entre 0,05 % en poids et 0,3 % en poids, ou, pour une teneur totale de l'alliage en Mn, Fe, Ni et Co supérieure à 0,6 % en poids, est de préférence comprise entre 2 % et 50 % en poids, d'une manière encore plus préférée entre 10 % et 30 % de ces valeurs de 0,05 % en poids et de 0,3 % en poids.

17. Palier lisse multicouche (1) selon l'une des revendications 1 à 16, **caractérisé en ce que** l'alliage contient du sélénium, la teneur en sélénium étant au maximum de 0,1 % en poids, de préférence comprise entre 0,0001 % en poids et 0,01 % en poids.

18. Palier lisse multicouche (1) selon l'une des revendications 1 à 17, **caractérisé en ce que** la teneur totale en manganèse, fer, nickel et cobalt, est au maximum de 10 % en poids, de préférence au maximum de 6 % en poids.

19. Palier lisse multicouche (1) selon l'une des revendications 1 à 18, **caractérisé en ce que** l'alliage à base de cuivre contient au moins un élément supplémentaire d'un troisième groupe comprenant, ou en étant constitué, des terres rares, du chrome, du zirconium, du titane et du béryllium, selon une teneur totale comprise entre 0,001 % en poids et 0,5 % en poids, de préférence entre 0,01 % en poids et 0,2 % en poids.

20. Palier lisse multicouche (1) selon l'une des revendications 1 à 19, **caractérisé en ce que** la couche anti-usure de contact (5) présente une épaisseur de couche comprise entre 2 µm et 100 µm, de préférence entre 3 µm et 30 µm, en particulier entre 4 µm et 15 µm.

21. Palier lisse multicouche (1) selon l'une des revendications 1 à 20, **caractérisé en ce que** la couche anti-usure de contact (5) présente une micro-dureté selon Vickers, pour une charge d'essai de 3 livres, comprise entre HV 200 et HV 500, de préférence entre HV 230 et HV 400, en particulier entre HV 250 et HV 350.

22. Palier lisse multicouche (1) selon l'une des revendications 1 à 21, **caractérisé en ce que** les grains de la solution solide de cuivre présentent une grosseur de grains supérieure à 5 nm, de préférence supérieure à 10 nm, en particulier supérieure à 50 nm.

23. Palier lisse multicouche (1) selon l'une des revendications 1 à 22, **caractérisé en ce que** la couche anti-usure de contact (5) est pour l'essentiel exempte de phases intermétalliques, et, dans le cadre d'une mesure par XRD, se présente sous forme d'une solution solide, avec un réseau cristallin de cuivre.

24. Palier lisse multicouche (1) selon la revendication 23, **caractérisé en ce que** la couche anti-usure de contact (5) est constituée d'une solution solide de cuivre, avec une constante réticulaire comprise entre 0,3630 nm et 0,3750 nm.

25. Palier lisse multicouche (1) selon l'une des revendications 1 à 24, **caractérisé en ce que** la couche anti-usure de contact (5) présente une épaisseur de couche d'au moins 50 %, en particulier d'au moins 150 % et au maximum de 1000 %, de préférence au maximum de 300 % de la rugosité Rz de la couche d'appui (5) ou d'une couche intermédiaire éventuellement disposée entre la couche d'appui (2) et la couche anti-usure de contact (5).

26. Palier lisse multicouche (1) selon l'une des revendications 1 à 25, **caractérisé en ce que** la couche anti-usure de contact (5) présente un revêtement qui est plus mou que la couche anti-usure de contact (5).

27. Palier lisse multicouche (1) selon la revendication 26, **caractérisé en ce que** le revêtement est constitué d'un matériau qui est choisi dans un groupe comprenant l'étain, le plomb, le bismuth, les vernis antifriction à base de polymères.
